# EUROPEAN PATENT SPECIFICATION

(11) **EP 0 549 905 B1**
(45) Date of publication and mention of the grant of the patent: **28.04.1999**
(21) Application number: 92120458.2
(22) Date of filing: 01.12.1992
(51) Int. Cl.: G01N 15/00, G01N 15/14, G06K 9/00

(54) **Method and apparatus for automated cell analysis**
Methode und Vorrichtung zur automatischen Zellanalyse
Méthode et dispositif pour l'analyse automatique de cellules

(30) Priority: 06.12.1991 US 802657
(43) Date of publication of application: 07.07.1993
(73) Proprietor: CELL ANALYSIS SYSTEMS, INC., Elmhurst, Illinois 60126-4944 (US)
(72) Inventor: Bacus, James V., Lombard, Illinois 60148 (US)
(74) Representative: Selting, Günther, Dipl.-Ing.

(56) References cited:
- EP-A- 0 317 139
- WO-A-87/02802
- WO-A-91/15826

## Description

The present invention relates to automated cell analysis methods and apparatus, and particularly, to methods and apparatus for recording, displaying and editing cell object image representations.

Cell analysis equipment exists which either automatically or with operator interaction selects particular cell objects from an imaged field of cell objects, and measures the selected cell objects. As a result of such measurement, the selected cell objects may be organized into categories by the automated equipment or by the operator. With such systems, automated selection and ciassification may be modified by manual intervention which gives a human operator the final control of the analysis. Bulk systems such as flow cytometers do not permit operator review and reclassification. Systems for the analysis of slide-mounted cell samples present human review opportunities, but do so at a cost of both equipment and operator time.

Such a method is disclosed in WO-A-8702802, wherein the pathologist performs the first sorting and selection of the cells manually. The pathologist has the option of classifying the cells into categories or rejecting inappropriate cells. This system uses the pathologists skill to identify visually abnormal cells and then uses a computer aided imaging analysis to analize those selected cells for the parameters desired.

Another known automated system disclosed in US Patent Application Serial No. 595,117, filed October 10, 1990, permits the establishment of category-defining parameters and compares measured values of each cell object of an image field with those parameters. In response to the comparison the equipment assigns a category to selected ones of the cell objects in the image field. The operator is permitted to view a display of the image field and is given the opportunity to remove the selected status of cell objects or to change the equipment assigned category as the process of selection and categorization takes place. This type of operation requires the constant review by a human operator. In place of operator review during selection and categorization, each cell sample in each field, and the specifics of selection and categorization may be stored in bulk storage and "played back" at a later time for operator review modification. Although the playback method of review permits the operator to perform review at his or her convenience, much operator time is still required since each cell object of each image field must be reviewed as it was first presented. As automated analysis systems and methods improve, the selection and classification by the equipment has improved both in accuracy and in speed. The time required by the human operator final review is still a burden whether done during the equipment analysis or thereafter. Further, when operator review is performed after equipment analysis, additional equipment time is required, and very large amounts of relatively slow access time bulk storage is required.

In WO-A-91/15826 an apparatus for storing and displaying images of single cells is described. After an automated two-step classification the selected cell images are stored in a computer memory. A third classification step is then performed by a human expert for cell analysis. For that purpose, the stored images are displayed on a video screen in an array of four or more images at one screen. The expert performs a classification by visual judging of the displayed cell images.

It is an object of the invention to provide a method and an apparatus for improving the working conditions for a human operator reviewing classified cell objects.

This object is, according to the invention, achieved by the features of claims 1 and 4.

This need is met and a technical advance is achieved in accordance with the present invention which reduces operator review time and provides a powerful set of analysis tools to be used by the operator during such review. A method for operation on automated cell analysis apparatus, in accordance with the present invention, comprises selecting from an image of a cell sample a plurality of cell objects and storing image representation extracted from each selected cell object. The stored images are extracted from the cell sample image in that they contain substantially only cell object image information without containing any substantial information concerning the cell sample image surrounding the cell object. The stored, extracted images are then selectively read from storage based on the physical attributes of the of the represented cell object. The display comprises a plurality of extracted images contiguously laid out on a rectangular background.

The method includes the measurement of at least one attribute value of the selected cell objects. The measured values are stored in association with the cell object which they represent, and may be used to choose ones of the stored, extracted cell object images for display.

The cell object images are displayed to an operator; the operator can identify individual ones of the cell objects and request information regarding the identified object. The analysis apparatus responds to such request by providing a text display showing the measured value or values of the identified cell object. Similarly, the operator can identify a displayed cell object image and request that it be removed from the group of selected cell objects. The apparatus responds to such a request by marking the identified cell object image as de-selected, and also removing the measured values of the identified cell object from any cumulative values which may be maintained. Operator identifying and requesting in the preferred embodiment is done using a display monitor cursor which is controlled by a mouse pointing device. The cursor is placed over a cell object image by manipulating the mouse, and the request is made by pressing a selected one of two buttons on the mouse.

The apparatus for performing the method comprises at least one image digitizer for producing a digitized cell sample image field, a processor for control of the apparatus and analysis of image, a display monitor and a cursor-controlling computer mouse. An image of a cell sample is digitized by the image processor, and the computer analyzes the digitized image to select and store the extracted cell object image representations in a computer memory. The stored cell object representations are then read from the memory and transmitted to monitor display device, which then uses them to provide a display image on the display monitor screen.

The computer analyzes the cell object images to measure the value of attributes of the cell objects. These measured values are stored in memory and linked to the cell object images from which the values have been measured. The linking permits continued association of a cell object image and the measured values of that image.
FIG. 1 is an isometric view of an apparatus embodying the present invention;
FIG. 2 is a block diagram of the apparatus of FIG. 1;
FIG. 3 shows a slide-born cell object image field;
FIG. 4 is a flow diagram of the operations performed to select and extract cell objects from the image field of FIG. 3;
FIG. 5 is a representation of a selected cell object data table created during cell analysis;
FIG. 6 is a representation of a cell object image array;
FIG. 7 is a flow diagram of operations performed in a directed search of the data in the selected cell object table;
FIG. 8 is a display screen representation useful in establishing directed search criteria;
FIG. 9 is a search result data table created by the flow diagram of FIG. 7;
FIG. 10 represents a search result in each table created by operation in accordance with FIG. 7;
FIG. 11 represents a monitor display presented during the operation in accordance with FIG. 8, and
FIG. 12 is a flow diagram of operations performed during extracted cell object review.

The preferred embodiment is described herein as an improvement to blood cell analysis of the type disclosed in US-Patent 4,199,748 and co-pending US Patent application Serial No. 91803,950 to James W. Bacus entitled "Blood Cell Analyzer". The principles of the present invention, however, apply equally well to other types of analysis for other types of cell objects. For example, the present invention also provides advantages in systems for measuring DNA content and/or multinucleation, as disclosed in application Serial No. 645,090 to Bacus filed January 22, 1991.

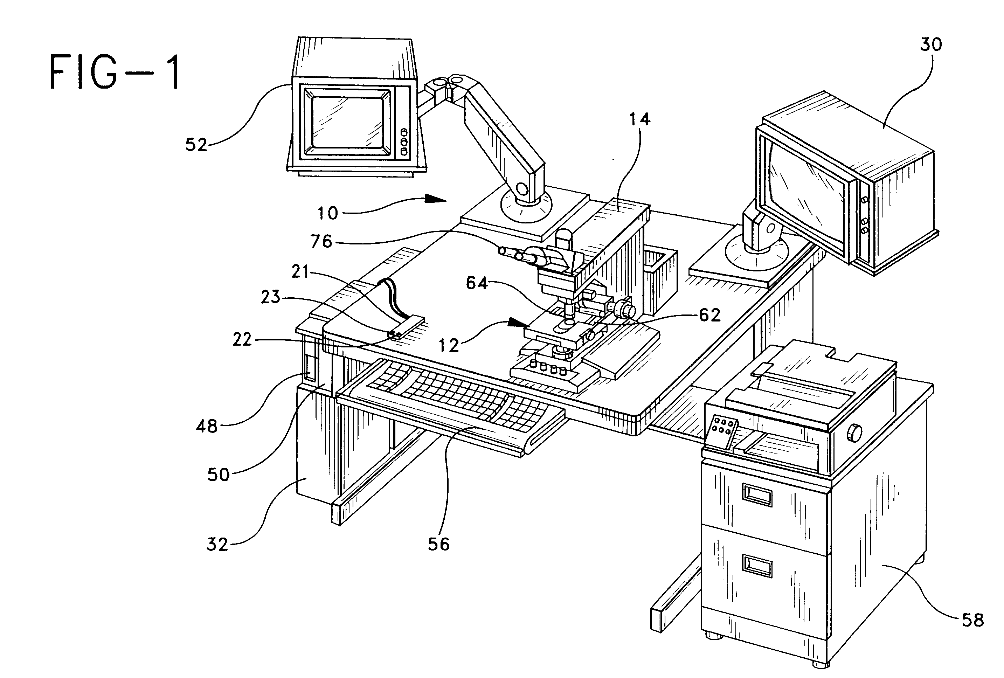

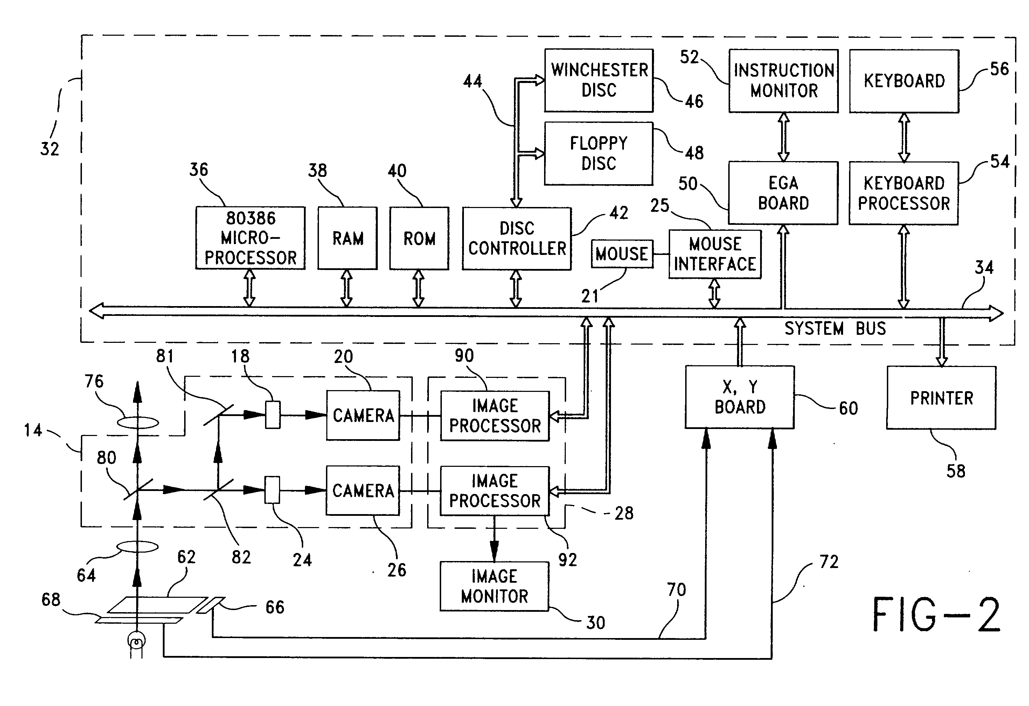

An apparatus embodying the present invention and generally identified by numeral 10 is shown in FIG. 1. The apparatus 10 comprises an optical microscope 12, which may be of any conventional type, but in this embodiment, is a Riechart Diastar. An optical conversion module 14 is mounted on the microscope 12 to enhance the optically magnified image of a cell sample viewed with the microscope 12. The optical conversion module 14, as may be seen in FIG. 2 includes a beam-splitting prism 80 which conveys approximately 90% of the light into optical conversion module 14 and passes the remaining 10% to the microscope 12 eyepiece 76. The light transmitted into module 14 is fed to a dichroic beam-spitter 82 which reflects a portion of the light to a television camera 20 via a red filter 18 and a mirror 81. The remaining portion of the light is filtered by the dichroic beam-spitter 82 and fed to a television camera 26 through a blue filter 24. The dichroic beam-spitter 82 selectively passes light having wavelengths greater than approximately 560 nanometers to the filter 18 and having a wavelength of less than 560 nanometers to the filter 24. Thus, the dichroic beam-spitter 82 acts as a first color filter before the light reaches the color filter 18 and 24.

Red filter 18 is a 620 ± 20 nanometer narrow bandpass optical transmission filter. When the light passes through the filter 18, the filter 18 preferentially blocks light from blue stained cell features and provides a high contrast cell feature image to the camera 20. The camera 20 then generates a NTSC image signal which is fed to an image processor 90 of an image processor module 28 (FIG. 2). Blue filter 24 is a 415 ± 20 nanometer narrow bandpass optical transmission filter. The blue filter 18 provides a high contrast image of red blood cell features to camera 26. The camera 26 then feeds an NTSC image signal to an image processor 92. Both of the image processors 90 and 92 contain analog to digital converters for converting the analog NTSC signals to a digitized 384 by 485 image. The center 256 by 256 array of pixels from this digitized image is then stored in frame buffers internal to the image processors.

During assembly of the apparatus of FIG. 1, and from time to time thereafter, if necessary, the optical elements of conversion module 14 are adjusted so that each camera 20 and 26 receives the same optical image field and each pixel of the digitized pixel arrays produced by processors 90 and 92, represents the same point of a viewed optical field.

Each of the image processors 90 and 92 is a Model AT 428 from the Data Cube Corporation, and includes six internal frame buffers (not shown). The image processors 90 and 92 are connected to a system bus 34 of a computer 32 (FIG. 2). The frame buffers of image processors 90 and 92 are mapped into the address spectrum of a microprocessor 36 in computer 32 to provide easy access for image processing.

The microprocessor 36 (FIG. 2) of computer 32 is an Intel 80386 microprocessor which is connected to the system bus 34. A random access memory 38 and a read only memory 40 are also connected to the system bus 34 for storage of program and data. A disk controller 42 is connected by a local bus 44 to a Winchester disk drive 46 and to a floppy disk drive 48 for secondary information storage. A video conversion board 50 in this embodiment, an EGA board having 256 bytes of memory is connected to the system bus 34 to control an instruction monitor 52 connected to the EGA board 50. System generated reports and interactive communication are presented to an operator on instruction monitor 52. A keyboard processor 54 is connected to the system bus 34 to interpret signals from a keyboard 56 which is connected to the keyboard processor 54. A cursor control device called a mouse 21 with two control buttons 22 and 23 is connected to bus 34 by a mouse interface 25. A printer 58 is connected to the system bus 34 for communication therewith. An X-Y or image field board 60 is connected to the system bus 34. The X-Y board 60 also is connected to a slide holder of the microscope 12 to sense the relative position of a slide 62 with respect to a microscope objective 64 and thus identify a field being viewed. Included is a Y position sensor 66 and an X position sensor 68. The Y position sensor 66 is connected via a communication path 70 to the X-Y board 60. The X position sensor 68 is connected via a communication path 72 to the X-Y board 60. The microscope 12 also includes an eyepiece 76 in optical alignment with the objective 74 for magnification of light forming an image of a cell sample on the slide 62.

Analysis by the apparatus of FIG. 1 can be a cooperative effort between a human operator and the apparatus. By interaction with keyboard 56, the operator can specify functions to be performed by the apparatus and establish parameters to control that performance. Also, from time to time, instructions and questions for the operator may be presented by the apparatus at the instruction monitor 52. For example, at the beginning of an analysis, the operator can specify certain threshold values to be used by the apparatus. Similarly, when reports are to be generated, operator interaction specifies which report should be generated and whether the report should be presented to instruction monitor 52, or the printer 58, or both. Such human-machine interaction is well known in the art and is not described in detail herein.

During cell object imaging and analysis the Microprocessor 36 reads digital image representations from the frame buffers of Image Processors 90 and 92 and produces a composite image from the separated image representations which composite image is sent to a display buffer of Image Processor 92 for display on Image Monitor 30.

In present example, the method and apparatus measures red blood cell characteristics and identifies reticulocytes. Initially a single layer blood film preparation is deposited on a slide e.g., 62 and stained with a supravital stain to enhance red blood cell RNA. The blood cell hemoglobin has a natrual absorption in the wave length range of blue filter 24 and the RNA stain enhances blood cell RNA for a contrast image in the wave length range of the red filter 18. After preparation, the slide is placed on microscope 12 and a first image field of the sample is focused upon. FIG. 3 represents an optical image field of a prepared red blood cell sample.

In FIG. 3, cell objects 101, 102 and 103 are assumed to be red blood cells, while cell objects 104, 105 and 106 are assumed to be non-red blood cells. Red blood cells 102 and 103 each contain a region of blue stained RNA 109 and 108 respectively. Optic Module 14 separates the optical image in Figure 3 into two images. One representing the stained RNA regions 108 and 109, which is applied to camera 26, and the other consisting of the remainder of the image field which is presented to camera 20. Each camera transmits a signal representing the image with which it is presented to its associated image processor where the image is converted to digital format. Microprocessor 36 then reads the two separated digitized images, stores those separate images and produces a composite image as shown in FIG. 3. The production of such an image is well known in the art.

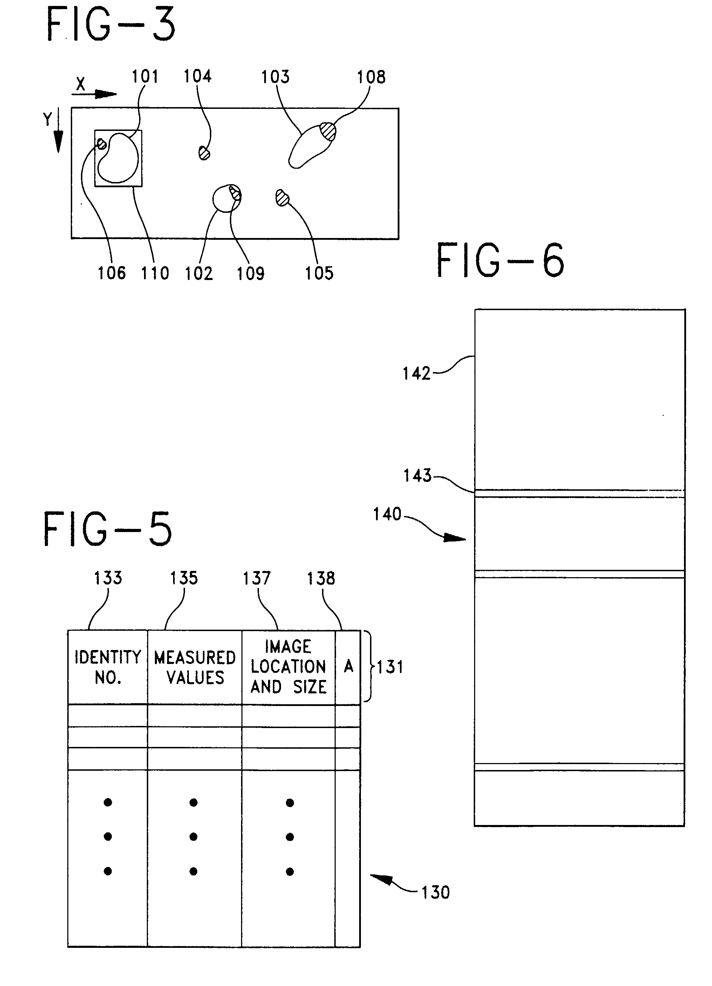

FIG. 4 is a diagram of the sequence of operations performed by the apparatus 10 in the analysis of the digital representation of the blood cell sample (FIG. 3). In a first step 111, selection criteria are established to be used by the apparatus to select red blood cells of interest to the analysis being performed. In the present example, the minimum area of a cell object and a minimum amount of hemoglobin within that area are established so that only whole red blood cells will meet the selection criteria. Conversely, the established selection criteria eliminate non-red blood cells and cell fragments from analysis. The selection criteria established in step 111 may be predetermined and read from storage of computer 32, or they may be entered by an operator through keyboard 56. In keeping with the present example, cell objects 101, 102 and 103 meet the established red blood cell criteria while cell objects 104, 105, and 106 do not meet the established red blood cell criteria.

After the selection criteria are established a step 112 is performed to allocate memory for the process, and a step 113 is performed to find a cell object in the image field represented in FIG. 3. The search is performed by rectilinear scanning of one row of pixels at a time starting from the upper left of FIG. 3. During scanning, the X and Y coordinate position of the scanning point is noted as indicated by the two arrows labeled "X" and "Y" in the upper left hand corner of FIG. 3. When a pixel is found having a grey level above a predetermined threshold, the contiguous pixels of the object are similarly identified. In the pixel field image represented by FIG. 3, cell object 101 will be the first cell object found.

Predetermined attributes of the found cell object are then measured in a step 115 in the present example. The measurements include, identifying the perimeter of the cell object including the maximum and minimum X-Y coordinate values of the perimeter, and the shape of the object. Additionally, values representing the total hemoglobin content of the cell object, the pallor (volume) and the central pallor of the object are measured. After the measurements of step 115 are completed, a decision is made in step 117 as to whether the cell object should be selected when compared with the selection criteria established in step 111. Since, according to the present example, cell object 101 is a red blood cell it will be selected and the flow proceeds to a step 119 where the measured values such as area and hemoglobin content are stored.

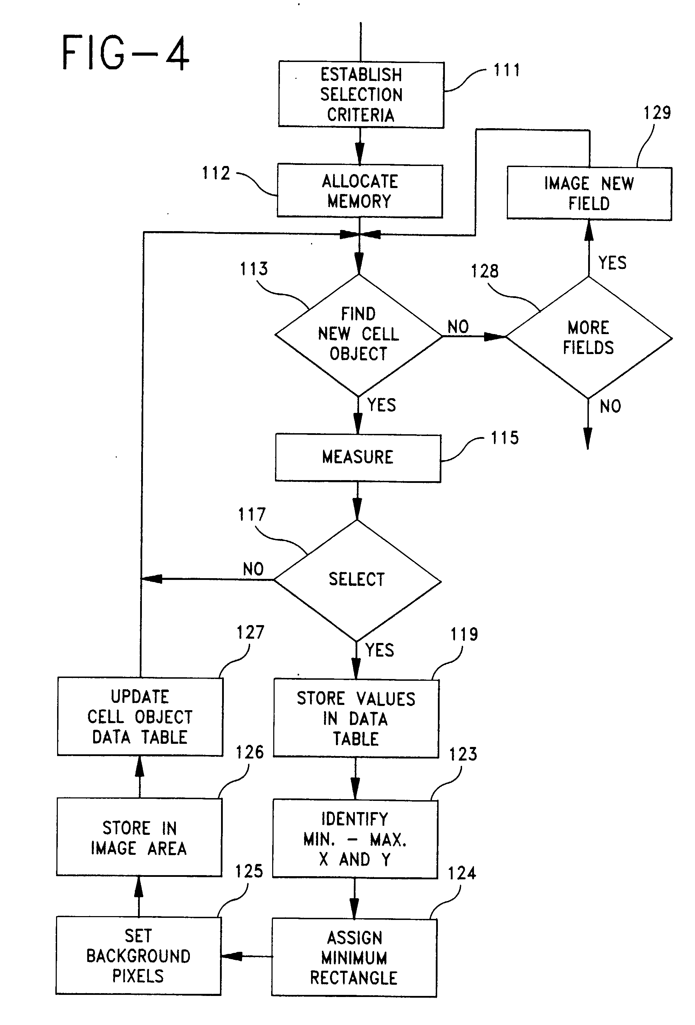

In the memory allocation step, 112, several data file structures are defined within computer 32 and portions of memory are allocated for these file structures. FIG. 5 represents a selected cell object data table at 130. A row, e.g., 131 of data table is made for each cell object which meets the criteria established in step 111. Each row includes four data fields 133, 135, 137 and 138. The field 133 stores an identity number for the cell object represented in the remaining fields of the row. The field 135 is used to store the values measured in step 115, and the field 137 identifies the storage location of a representation of the cell object. Field 138 is an activity bit indicating the activity status of the cell object represented by the row containing it. When first written, field 138 is written with a logic 1 indicating an active cell object. Although FIG. 5 represents the data storage as an orderly rectangular array, the actual storage of data may occur in separate portions of memory which are linked by pointers or index tables as is well known in the art.

Each cell selected in step 117 is assigned a sequential identification number starting with 1. Accordingly, cell object 101 will be assigned the identification number 1 which will be written into field 133. Next, step 119 writes into the associated field 135 the values measured in step 115 and a logic 1 activity bit 138. Upon completion of step 119 for a selected cell object, steps 123 through 127 are performed to extract and store a representation of the cell object selected in step 117. In steps 123-127 a minimum sized rectangle e.g., 110 is constructed around the selected cell object and the cell object representation within the rectangle is stored in a cell object image array 140 (FIG. 6). In a step 123 the minimum and maximum X-Y coordinate values of the selected cell object are identified and used in step 124 to assign the minimum sized rectangle about the cell object. In the present example a minimum sized rectangle is one having "x" dimensions, one pixel larger than the cell object e.g. 101 on both sides and a "y" dimension one pixel larger than the "y" dimension of the cell object, e.g. 101 on both top and bottom. After the rectangle 110 is assigned, all pixels within the rectangle which are not a part of the selected cell object are set to a background value in step 125.

The cell object images stored in Table 140 and copies thereof are referred to as extracted images herein. An extracted image is one which shows a cell object and is not limited to display or use in the environment from which the image representation was taken. An extracted image is formed by copying the cell object on a rectangular field of the cell object image array 140. However, other methods, such as copying the cell object image on other shapes of background fields or copying only the cell object image without a background field, can be used.

A cell object image array 140 (FIG. 6) which was allocated in step 112 is used to store the pixel data and certain identifying data for each extracted cell object. Since the rectangle size assigned in step 124 may vary from selected cell object to selected cell object, no preset amount of memory is set aside for each extracted cell object. After the rectangle dimensions for a given cell object are assigned in step 124 the amount of memory required to store a representation of the cell object is known and can be allocated. The value of each pixel of the cell object and the background value (step 125) within the assigned rectangle is then read from the field image (FIG. 3) in a rectilinear scanning manner and stored (step 126) sequentially into allocated cell object image array block 142 of FIG. 6.

In order to associate the extracted cell object image stored in memory block 142 with the proper cell object in data table 130 (FIG.5), the location of memory block 142 is stored in field 137 of table 130. Also stored in field 137 is the number of pixels stored to represent the extracted representations of cell object 101. Advantageously, the cell object identification number and the length in pixels of the stored cell object image may be stored at the end of the cell object pixel image data 142. This is represented in FIG. 6 by the small storage area 143.

Upon completion of the update to cell object data table in step 127, the flow proceeds to step 113 where a new cell object is found and measured (step 115). In the present example, red blood cell 103 is next found and its image and data will be extracted and stored as described with regard to cell object 101. The next cell object found in the image field of FIG. 3 will be cell object 104 which, by reason of the preconditions of the present example, does not meet the criteria established in step 111. Accordingly, when the selection step 117 is performed for cell object 104, the flow proceeds to step 113 without the assignment of a cell object identity or the storage of the cell object's image or data.

The finding, measuring and conditionally selecting of cell objects from the image field of FIG. 3 continues until no new cell object is found in step 113. On this occurrence, the flow proceeds from step 113 to step 128 where a determination is made whether additional fields on slide 62 should be imaged and analyzed. This condition is typically evaluated by comparing the number of selected cell objects with a predetermined threshold in the range of 500 to 1000 such cell objects. When a sufficient number of cell objects have been selected, flow proceeds from step 128 to the end of the routine. Alternatively, when fewer than the predetermined number of cell objects have been selected, the flow proceeds through step 129 where a new field is imaged back to step 113 in which new cell objects may be selected.

In the present example, the selection of new image fields in step 129 is performed manually by a human operator. Alternatively, the selection of new image fields and focusing could be performed by the apparatus in accordance with United States Patent No. 4,199,748.

With the completion of the analysis and data accumulation routine of the FIG. 4, the apparatus has stored an extracted cell object image representation and a set of measured values for each cell object selected by the apparatus in step 117. The accumulated information represented in FIGS. 5 and 6 can be used directly to generate reports of the findings. However, it may be desired to have the apparatus select information to be reviewed by a skilled human operator prior to the final report generation. By the previously described measurement and data accumulation operations, the accumulated information is in storage (FIGS. 5 and 6) and available to an operator when the operator wants to review.

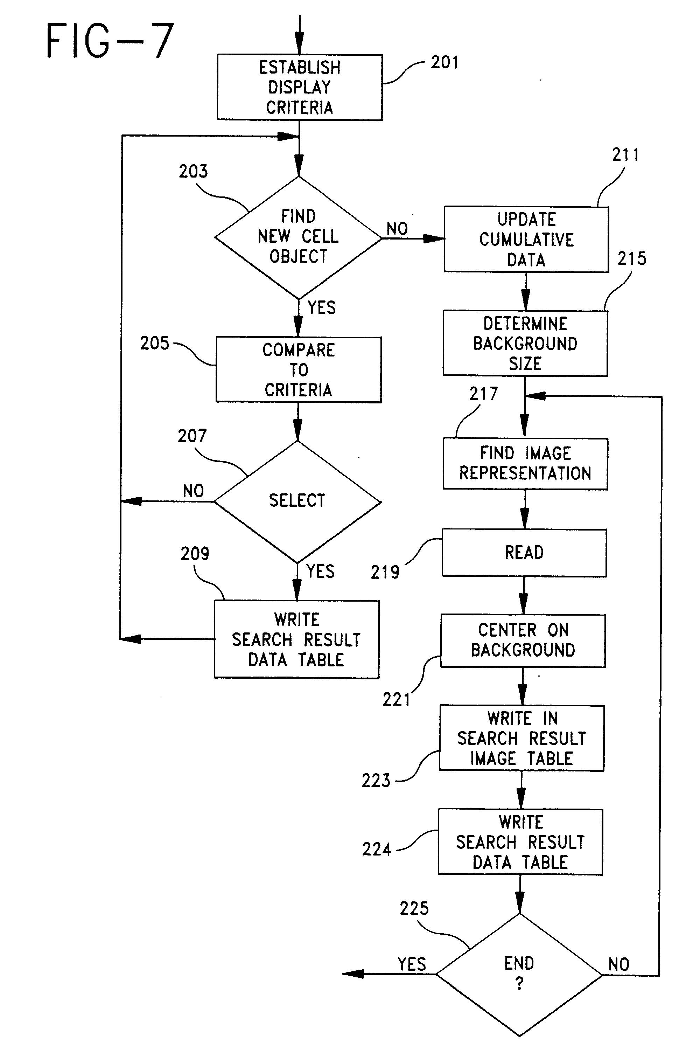

The present system permits an operator to review and modify the accumulated data using a powerful new set of tools. FIG. 7 is a flow diagram of a review routine which begins with the step 201 to enable the operator to define selection criteria for the cell objects to be reviewed. In step 201, a display of the type shown in FIG. 8 is presented on the instruction monitor 52. The operator can continue the search without providing search criteria or can provide certain criteria to reduce, for purposes of evaluation, the amount of data to be reviewed.

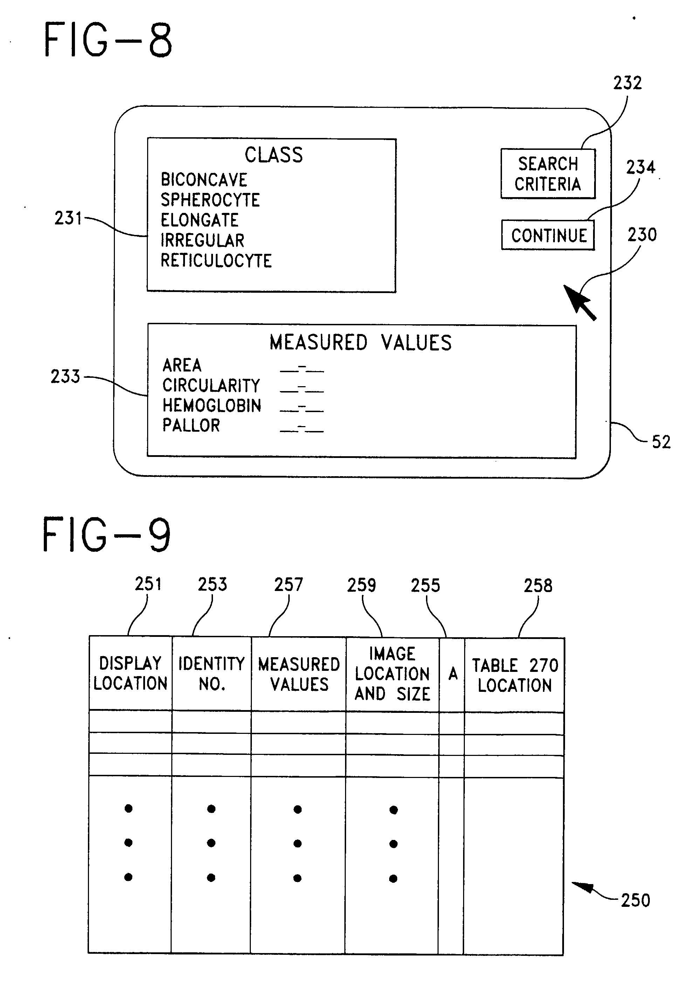

By means of the mouse pointing device 21 and its associated cursor 23 an on monitor 52, one or more of the classes of objects can be selected from a class field 231. The operator can also specify value ranges for the particular measured attributes shown in the measured value field 233. For example, the operator can select all spherocytes having hemoglobin in the range of 20 to 27 picograms. After the search criteria are established on monitor 52, the continue zone 234 is "clicked" by the mouse and the flow of FIG. 7 proceeds to step 203 which determines if unreviewed cell objects (rows) remain in the selected cell object data table 130 (FIG. 5). Step 205 compares the values stored in the measured value field 135 of the next unreviewed cell object in table 130 and step 207 determines if the reviewed cell object meets the criteria established in step 201. When the cell object values do not meet the search criteria, the loop consisting of blocks 203, 205 and 207 is again performed using the next cell object of data table 130. Alternatively, when step 207 determines that a cell object meets the criteria, a step 209 performed to record data in a search result data table 250 (FIG. 9) for the selected cell object.

The search result data table 250 is similar to the selected cell object data table 130 of FIG. 5. Each row of the search result data table 250 is assigned to one cell object selected in step 207 from the cell object data table 130. Five data fields are present in each row. A first field 251 is assigned by the apparatus and consists of a search result identity field to indicate the relative location of each row within table 250. A field 253 is written with the identity number of the selected cell object data table 130 so that locations in table 130 can be accessed. A field 255 is an activity field, the use of which is discussed later herein. However, when a row is first written in search result data table 250, the activity field 255 is written to a logic one indicating an active entry. The measured values field 257, and an image location and size field 259 are direct copies of the information stored in like fields 135 and 137 of selected cell object data table 130. The Table 270 location field 258 is filled in later.

After the search result data table row is written in step 209, the flow proceeds to step 203 to review data for another cell object. When all cell objects in table 130 meeting the established criteria have been found, flow proceeds from step 203 to step 211. In step 211, the rows of the search result data table 250 are checked and the measured values of all active cell objects are used to generate (step 211) cumulative information regarding cell objects in search result data table 250. One item of cumulative information is, for example, the average hemoglobin per cell. For this cumulative value, the total hemoglobin of all active (status byte 255 = one) cell objects listed in the search result data table 250 is determined and divided by the total number of cell objects listed in the search result data table.

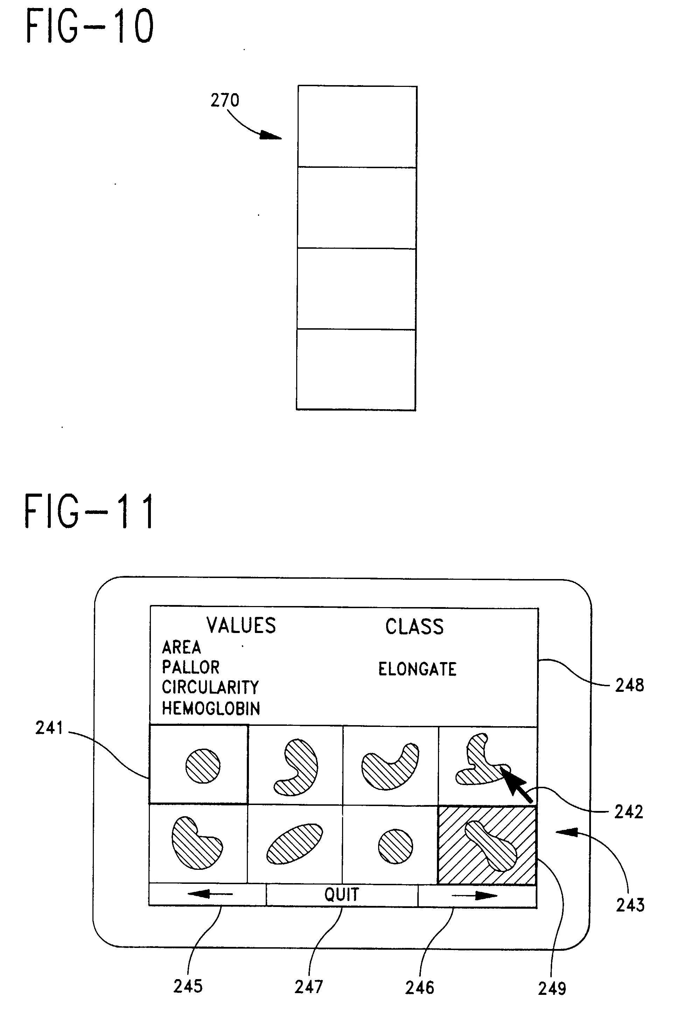

After the cumulative values are updated in step 211, a sequence of steps 215, 217, 219, 221, 223, 224 and 225 is performed to prepare a display image table 270 (FIG. 10) and link it with search result data Table 130. Prior to the performance of the steps 215 through 225, extracted cell image representations are stored in the cell object image array 140 in non-equally sized blocks. Steps 215 through 225 store the image representations of cell objects selected in step 207 in a more regular format in a display image table 270 (FIG. 10). The contents of the display image table 270, or portions thereof, can then be moved to the video display buffer of information processor 92 for display in an image consisting of contiguous representations of extracted cell objects as shown in FIG. 11.

Initially, a step 215 is performed to determine the size of a background rectangle for all images to be displayed. One such background rectangle has been given a dark outline and been labeled 241 in FIG. 11. The background rectangle size in the present embodiment is determined by finding the x and the y dimensions of the largest extracted cell object representation selected in step 207. The background rectangle size is then selected to be slightly larger, e.g., five pixels, than the largest x and y coordinate dimensions. This rectangle size is used as the background for all cell object representations of the current analysis. Although a rectangular background area is shown in the present embodiment, background areas of other shapes can also be sized as above described and used to display the extracted cell object representations.

Next a step a 217 is performed to find a first cell object in search result data table 250. The extracted image representation of that cell object, as identified by field 259, is then read in step 219 and centered in step 221 on the previously selected rectangular background 241. After centering, the selected background rectangle with the cell object image is written in step 223 to a display image table 270 of FIG. 10. In display image table 270, all cell objects will occupy the same amount of memory since they are all placed on the same sized background rectangle. Next, the image location is stored (step 224) in field 258 of search data Table 250, and a step 225 is performed to determine if additional cell object image representations are to be placed in display image table 270. This decision step 225 forms a loop which reads sequentially all of the active cell objects represented in search result data table 250 and stores their representation in display image table 270. When all images have been displayed in display image table 270, step 225 causes the flow to proceed to the end of the routine shown in FIG. 7.

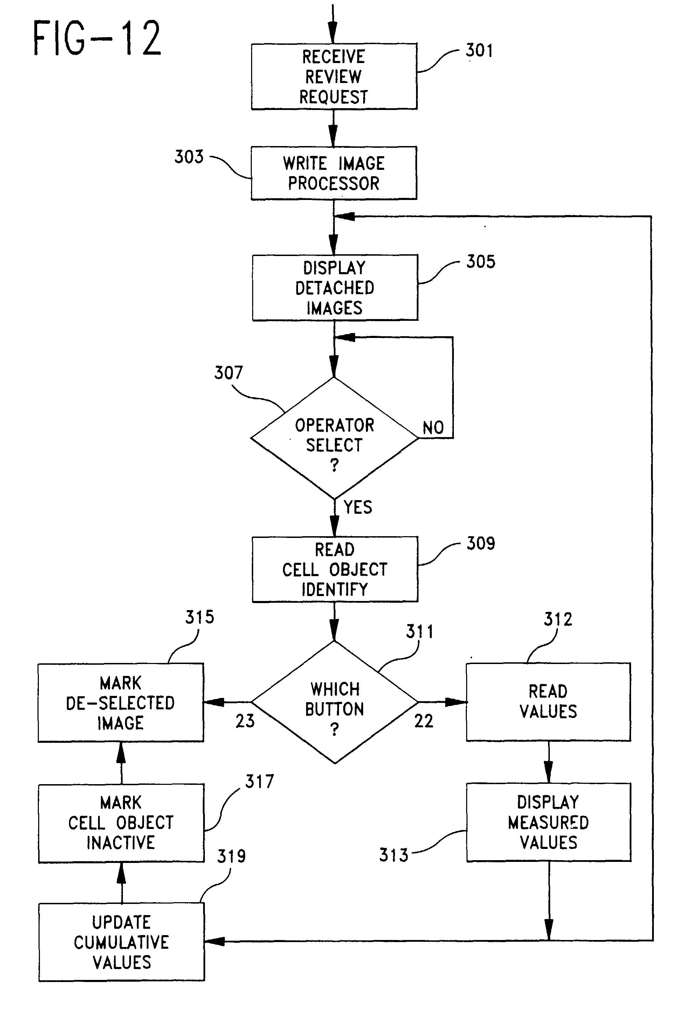

After the search result data table 250 and display image table 270 have been created, operator review of the extracted cell object representations can begin. This function is represented by the flow diagram of FIG. 12. The review sequence of FIG. 12 begins in step 301 with the receipt of a review request from the operator. Responsive to such a review request computer 36 writes (step 303) the image representations from display image table 270 into the display frame buffer of image processor 92. Should the display image table 270 include more cell object representations than are displayable at one time by the image processor, the display image table is separated into pages of appropriate size to fit within the image processor. The pages are then moved to the image processor 92 one at a time. After writing the display to image processor 92, that image is displayed by a step 305 on image monitor 30 as a group of extracted cell object images, as shown in FIG. 11 in a step 305.

The display on display image monitor 30 includes a central region 243 in which the cell object image representations appear. Beneath the central image region 243 is a command row having a left arrow region 245, a right arrow region 246 and a quit region 247. A cursor 242 can be moved throughout the display of FIG. 11 to select different cell objects and different control regions. For example, the operations performed in flow diagram of FIG. 12 can be terminated at any time by placing cursor 242 on the quit region 247 and pressing mouse push-button 22. Similarly, when more than one page of cell object image representations are present in display image table 270, clicking the left arrow 245 causes the preceding page to be displayed in region 243 while clicking the right arrow 246 causes the next page of cell object image representations to be displayed.

While the display image is shown on monitor 30, the apparatus enters an operator select mode (step 307) which allows the operator to move cursor 242 to within the rectangle of any of the displayed cell object representations. The operator can view the measured values of a displayed cell object by placing the cursor in the rectangle of a cell object and pressing mouse button 22. When button 22 is pressed during step 307, the flow proceeds to step 309 where the x and y coordinate values of the cursor 242 are read to identify the cell object under the cursor. The apparatus then identifies the cell object selected from the identified cursor position. A step 311 is then performed to determine whether button 22 or button 23 of mouse 21 was pressed. Button 22 signifies that the operator desires to see the measured values for the cell selected by the cursor. Accordingly, a step 312 is performed in which the measured values are read from search result data table 250 and displayed (step 313) in display area 248. The flow then returns to the operator cell object select step 307.

Pressing button 23 while in decision block 307 permits the de-selection of a machine selected cell object. The press of button 23 is detected in block 311 which will route the flow to step 315 where the cell object image selected is visually marked. Such visual marking may consist of diagonal bars running across the cell object image which are provided by a write operation to the appropriate area of the display image frame buffer 270. After the image is marked in step 315, a step 317 is performed in which the status byte 255 (FIG. 9) of the selected cell object data table 250 is written to logical zero indicating inactivity. After step 317, a step 319 is performed to recalculate the cumulative values. After the performance of step 319, the flow again returns to step 307. The de-selection of any causes its activity byte 255 to be set to the inactive status so that its effect on any report or cumulative value to be withdrawn. When the operator has completed a review of all of the cell object image representations, the cursor can be moved to the quit position 247 and button 22 pressed, this action ends the review session. At the conclusion of the review session, the cell object status bytes 138 associated with de-selected cell object entries (field 255) in table 250 are also set to the inactive or zero status.

In the preceding example, red blood cells were measured and reticulocytes identified by the apparatus. The extracted cell display features including the ability to display groupings of similar cells and to interact with the grouped cells can be applied to other types of cell objects and measurements without departing from the scope of the present invention. For example, the present invention can be used in an apparatus which measures nuclear DNA and/or detects multinucleated cells. With such apparatus the operator, after the analysis of cell objects, could specify the grouped display of cells having a particular range of nuclear DNA or of multinucleated cells.

## Claims

1. A method for displaying cell objects (101-108) in an automated cell analysis apparatus (10), the cell objects (101-108) being selected from at least one image field of a cell sample, said method comprising:
establishing classification criteria defining a plurality of cell object classifications,
selecting a plurality of cell objects (101-108) from said image field and measuring the value of at least one attribute of said selcted cell objects (101-108),
automatically classifying each selected cell object (101-108) into one of said classifications,
storing an extracted image representation (142) of each of said selected cell objects (101-108) in a storage (38,46,48),
reading from said storage (38,46,48) a plurality of said extracted cell object representations (142) choosen in response to the classification of said cell objects (101-108), and
displaying, substantially simultaneously, a plurality of said extracted cell object representations (142) read from said storage (38,46,48),
**characterized by**
after the reading step: maintaining said measured attribute of said cell object (101-108) stored in association with each extracted cell object representation (142),
identifying one of said displayed cell object representations (142) by operator interaction with the apparatus (10), and
displaying the measured attribute associated with the identified cell object representation (142).

2. A method in accordance with claim 1, comprising:
maintaining a cumulating attribute value calculated on the basis of the measured attribute values of all said cell objects (101-108) selected in said selecting step,
identifying at least one of said displayed extracted cell object representations (243) by operator interaction with the apparatus (10),
de-selecting the identified cell objects (249) represented by said identified cell object representations, and
recalculating the cumulating attribute value on the basis of all measured attribute values without the measured attribute values of each de-selected cell object (249).

3. A method in accordance with claim 1 or 2, comprising:
measuring the dimensions of the cell object representation read from said storage (38,46,48), and
the displaying step comprising determining the size of a background display area from said measured dimensions and presenting each cell object chosen for displaying on a background display area (249) of said determined size.

4. An automated cell analysis apparatus (10) for displaying cell objects selected from at least one image field of a cell sample comprising:
means (32) for establishing classification criteria defining a plurality of cell object classifications,
means (14,32) for selecting a plurality of cell objects (101-108) from said at least one image field,
means (14,32) for measuring at least one attribute value of each of said selected cell objects (101-108),
means (32) for automatically classifying each selected cell object (101-108) into one of said cell classifications,
means (32) for storing an extracted image representation (142) of each of said selected cell objects (101-108),
means (32) for reading a plurality of said extracted object representations (142) choosen in response to the classification of said cell objects, and
means (30) for substantially simultaneously displaying the plurality of said extracted cell object representations (142) read from said storage means (38,46,48),
**characterized by**
means (32) for maintaining the measured attribute in association with each extracted cell object representation (142),
means (242) for identifying one of said displayed extracted cell object representations (243) by an operator, and
said means (30) for displaying comprising means (30,248) for additionally displaying the measured attribute associated with the identified cell object representation (142).

## Patentansprüche

1. Verfahren zum Anzeigen von Zellobjekten (101-108) in einer automatischen Zellanalysevorrichtung (10), wobei die Zellobjekte (101-108) aus wenigstens einem Bildfeld einer Zellprobe ausgewählt sind, wobei das Verfahren die folgenden Schritte aufweist:
Erstellen von Klassifizierungskriterien, die mehrere Zellobjektklassen definieren,
Wählen mehrerer Zellobjekte (101-108) aus dem Bildfeld und Messen des Werts wenigstens eines Attributs der gewählten Zellobjekte (101-108),
automatisches Klassifizieren jedes gewählten Zellobjekts (101-108) in eine der Klassen,
Speichern einer extrahierten Bildwiedergabe (142) jedes der gewählten Zellobjekte (101-108) in einem Speicher (38, 46, 48),
Lesen mehrerer in Abhängigkeit von der Klassifizierung der Zellobjekte (101-108) ausgewählter extrahierter Zellobjektwiedergaben (142) aus dem Speicher (38, 36, 48), und
im wesentlichen gleichzeitiges Anzeigen mehrerer der aus dem Speicher (38, 46, 48) ausgelesenen extrahierten Zellobjektwiedergaben (142),
gekennzeichnet durch
nach dem Leseschritt: Beibehalten des gemessenen Attributs des Zellobjekts (101-108), das in Verbindung mit jeder extrahierten Zellobjektwiedergabe (142) gespeichert ist,
Identifizieren einer der angezeigten Zellobjektwiedergaben (142) durch Interaktion des Bedieners mit der Vorrichtung (10), und
Anzeigen des zu der identifizierten Zellobjektwiedergabe (142) gehörenden gemessenen Attributs.

2. Verfahren nach Anspruch 1, mit den folgenden Schritten:
Beibehalten eines kumulierten Attributwertes, der auf der Basis der gemessenen Attributwerte sämtlicher in dem Auswählschritt gewählten Zellobjekte (101-108) berechnet wurde,
Identifizieren wenigstens einer der angezeigten extrahierten Zellobjektwiedergaben (243) durch Interaktion des Bedieners mit der Vorrichtung (10),
Abwählen der identifizierten Zellobjekte (249), die durch die identifizierten Zellobjektwiedergaben wiedergegeben sind, und
Neuberechnen des kumulierten Attributwertes auf der Basis sämtlicher gemessener Attributwerte ohne die Attributwerte jedes der abgewählten Zellobjekte (249).

3. Verfahren nach Anspruch 1 oder 2, mit den folgenden Schritten:
Messen der Abmessungen der aus dem Speicher (38, 46, 48) ausgelesenen Zellobjektwiedergabe, und,
im Anzeigeschritt: Bestimmen der Größe einer Anzeige-Hintergrundfläche aus den gemessenen Abmessungen und Anzeigen jedes der Zellobjekte, die zum Anzeigen auf einer Anzeige-Hintergrundfläche (249) der bestimmten Größe ausgewählt sind.

4. Automatische Zellanalysevorrichtung (10) zum Anzeigen von Zellobjekten, die aus wenigstens einem Bildfeld einer Zellprobe ausgewählt sind, mit:
einer Einrichtung (32) zum Erstellen von Klassifizierungskriterien, die mehrere Zellobjektklassen definieren,
einer Einrichtung (14, 32) zum Wählen mehrerer Zellobjekte (101-108) aus dem wenigstens einem Bildfeld,
einer Einrichtung (14, 32) zum Messen wenigstens eines Attributwertes jedes der gewählten Zellobjekte (101-108),
einer Einrichtung (32) zum automatischen Klassifizieren jedes gewählten Zellobjekts (101-108) in eine der Zellklassen,
einer Einrichtung (32) zum Speichern einer extrahierten Bildwiedergabe (142) jedes der gewählten Zellobjekte (101-108),
einer Einrichtung (32) zum Lesen mehrerer in Abhängigkeit von der Klassifizierung der Zellobjekte ausgewählter extrahierter Objektwiedergaben (142), und
einer Einrichtung (30) zum im wesentlichen gleichzeitigen Anzeigen der aus der Speichereinrichtung (38, 46, 48) ausgelesenen mehreren extrahierten Zellobjektwiedergaben (142),
gekennzeichnet durch
eine Einrichtung (32) zum Beibehalten des gemessenen Attributs in Verbindung mit jeder extrahierten Zellobjektwiedergabe (142),
eine Einrichtung (242) zum Identifizieren einer der angezeigten extrahierten Zellobjektwiedergaben (243) durch einen Bediener, und
wobei die Anzeigeeinrichtung (30) eine Einrichtung (30, 248) zum zusätzlichen Anzeigen des zu der identifizierten Zellobjektwiedergabe (142) gehörigen gemessenen Attributs aufweist.

## Revendications

1. Procédé pour afficher des objets cellulaires (101 à 108) dans un appareil d'analyse de cellules automatisé (10), les objets cellulaires (101 à 108) étant sélectionnés à partir d'au moins un champ d'image d'un échantillon de cellules, ledit procédé comprenant :
l'établissement de critères de classification définissant une pluralité de classifications d'objets cellulaires,
la sélection d'une pluralité d'objets cellulaires (101 à 108) à partir dudit champ d'image et la mesure de la valeur d'au moins un attribut desdits objets cellulaires sélectionnés (101 à 108),
le classement automatique de chaque objet cellulaire sélectionné (101 à 108) dans l'une desdites classifications,
la mémorisation d'une représentation d'image extraite (142) de chacun desdits objets cellulaires sélectionnés (101 à 108) dans une mémoire (38, 46, 48),
la lecture, dans ladite mémoire (38, 46, 48), d'une pluralité desdites représentations d'objet cellulaire extraites (142) choisie en fonction de la classification desdits objets cellulaires (101 à 108), et
l'affichage, de façon pratiquement simultanée, d'une pluralité desdites représentations d'objet cellulaire extraites (142) lue dans ladite mémoire (38, 46, 48),
caractérisé par
après l'étape de lecture : la conservation dudit attribut mesuré dudit objet cellulaire (101 à 108) mémorisé en association avec chaque représentation d'objet cellulaire extraite (142),
l'identification de l'une desdites représentations d'objet cellulaire affichées (142) par un dialogue de l'opérateur avec l'appareil (10), et
l'affichage de l'attribut mesuré associé à la représentation d'objet cellulaire identifiée (142).

2. Procédé selon la revendication 1, comprenant :
la conservation d'une valeur d'attribut cumulative calculée sur la base des valeurs d'attribut mesurées de tous lesdits objets cellulaires (101 à 108) sélectionnés à ladite étape de sélection,
l'identification d'au moins l'une desdites représentations d'objet cellulaire extraites affichées (243), par un dialogue de l'opérateur avec l'appareil (10),
la dé-sélection des objets cellulaires identifiés (249) représentés par lesdites représentations d'objet cellulaires identifiée, et
le re-calcul de la valeur d'attribut cumulative sur la base de toutes les valeurs d'attribut mesurées sans les valeurs d'attribut mesurées de chaque objet cellulaire dé-sélectionné (249).

3. Procédé selon la revendication 1 ou 2, comprenant :
la mesure des dimensions de la représentation d'objet cellulaire lue dans ladite mémoire (38, 46, 48), et
l'étape d'affichage comprenant la détermination de la taille d'une zone d'affichage de fond à partir desdites dimensions mesurées et la présentation de chaque objet cellulaire, choisi pour être affiché, sur une zone d'affichage de fond (249) de ladite taille déterminée.

4. Appareil d'analyse de cellules automatisé (10) destiné à afficher des objets cellulaires sélectionnés à partir d'au moins un champ d'image d'un échantillon de cellules, comprenant :
un moyen (32) destiné à établir des critères de classification définissant une pluralité de classifications d'objets cellulaires,
un moyen (14, 32) destiné à sélectionner une pluralité d'objets cellulaires (101 à 108) à partir dudit au moins un champ d'image,
un moyen (14, 32) destiné à mesurer au moins une valeur d'attribut de chacun desdits objets cellulaires sélectionnés (101 à 108),
un moyen (32) destiné à classer automatiquement chaque objet cellulaire sélectionné (101 à 108) dans l'une desdites classifications de cellules,
un moyen (32) destiné à mémoriser une représentation d'une image extraite (142) de chacun desdits objets cellulaires sélectionnés (101 à 108),
un moyen (32) destiné à lire une pluralité desdites représentations d'objet extraites (142) choisie en fonction de la classification desdits objets cellulaires, et
un moyen (30) destiné à afficher pratiquement simultanément la pluralité desdites représentations d'objet cellulaire extraites (142), lue dans ledit moyen de mémorisation (38, 46, 48),
caractérisé par
un moyen (32) destiné à conserver l'attribut mesuré en association avec chaque représentation d'objet cellulaire extraite (142),
un moyen (242) destiné pour l'identification de l'une desdites représentations d'objet cellulaire extraites affichées (243) par un opérateur, et
ledit moyen (30) destiné à afficher comprenant un moyen (30, 248) destiné à afficher en plus l'attribut mesuré associé à la représentation d'objet cellulaire identifiée (142).
